Europäisches Patentamt

European Patent Office

Office européen des brevets

(11) Publication number: **0 292 045**
**A1**

## (12) EUROPEAN PATENT APPLICATION

(21) Application number: 88200898.0

(22) Date of filing: 05.05.88

(51) Int. Cl.⁴: **A23L 3/04 , B65B 55/12**

(30) Priority: 19.05.87 NL 8701199

(43) Date of publication of application:
**23.11.88 Bulletin 88/47**

(84) Designated Contracting States:
**BE DE FR GB IT NL**

(71) Applicant: **STORK AMSTERDAM B.V.**
**2 Ketelstraat**
**NL-1021 JZ Amsterdam(NL)**

(72) Inventor: **Hoppe, Johannes**
**54, Tongnaald**
**NL-1141 CB Monnickendam(NL)**

(74) Representative: **van der Arend, A.G.A., Ir. et al**
**EXTERPATENT B.V. P.O. Box 90649**
**NL-2509 LP The Hague(NL)**

(54) **Sterilization device with passage time monitoring.**

(57) Sterilization device comprising a housing (1) having a preheating compartment (2), a sterilization compartment (3) and a cooling compartment (4), an endless conveyance means (5) having attached thereto holders which are suitable for receiving products to be sterilized, the conveyance means running through said compartments (2, 3, 4) between an infeed station (9) and a discharge station (10), the device further comprising means for monitoring the passage time for each holder passing the sterilization compartment (3) and providing a corresponding message signal when exceeding a reference time.

FIG.1.

EP 0 292 045 A1

## Sterilization device with passage time monitoring.

The invention relates to a sterilization device such as that described in the preamble to Claim 1.

In a sterilization device of this sort known from practice the drive of the means of conveyance can be discontinuous for various reasons. In some embodiments of the infeed and discharge stations the discontinuity can be due to the stopping of the means of conveyance to place products for sterilization in the holders at the infeed station and to remove the products from the holders at the discharge station. Other reasons can be breakdowns in the equipment and mains power cuts.

As a result of the discontinuous conveyance of the holders through the treatment rooms, there is a risk that the products for sterilization, particularly in the sterilization room, will be exposed too long to high temperatures, which gives rise to over-sterilization of the products and means that these products are no longer fit for their original use.

The object of the invention is to produce a sterilization device in which the passage time of the holders through the sterilization room or the over-sterilization time or standstill time in the sterilization room is monitored and, depending on the measured result obtained, a message signal is produced.

This object is achieved by means of a sterilization device such as that described in Claim 1. The message signal can be used in various ways, for example, for producing an alarm signal or for operating ejection elements for the holders in the discharge station.

According to Claim 11, each holder group can consist of only one single holder, which maximizes the resolution of the monitoring.

According to Claim 2, a simple embodiment of the sterilization device according to the invention is obtained, in which the exact passage time through the sterilization room can be determined for each holder leaving the sterilization room.

The invention will be explained with reference to the figures, in which:

Fig. 1 shows schematically a cross section of a sterilization device according to the invention;

Fig. 2 shows a wiring diagram of the electrical monitoring part of the sterilization device shown in Fig. 1.

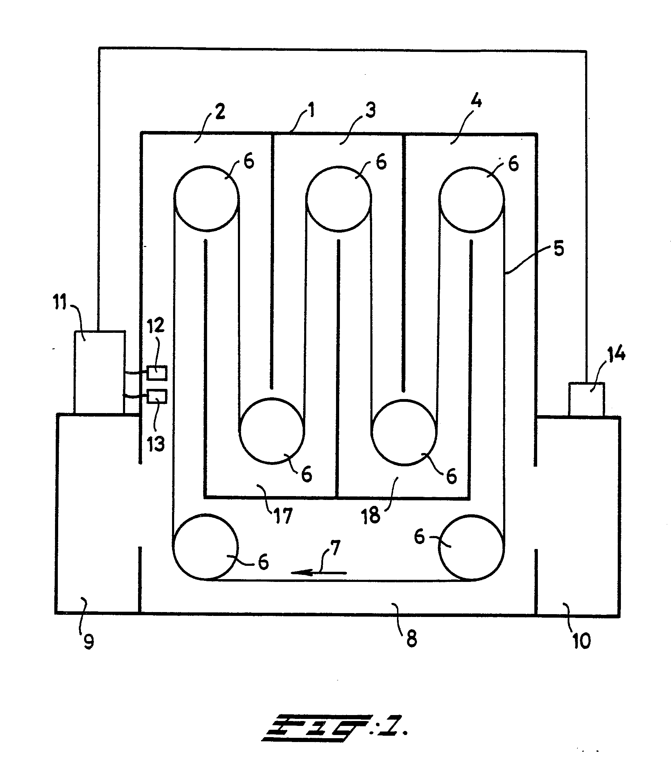

The sterilization device according to the invention shown schematically in Fig. 1 comprises a housing 1, which has a preheating compartment 2, a sterilization compartment 3, and a cooling compartment 4. Disposed inside the treatment compartments, or treatment rooms, 2, 3, 4 is an endless means of conveyance 5, which is conveyed over rollers 6 and driven by drive means (not shown) in the direction of the arrow 7 in such a way that the means of conveyance 5 is conveyed up at least once and down at least once in each compartment 2, 3, 4, and on leaving the cooling compartment 4 is conveyed via a returncompartment 8 back into the preheating compartment 2.

Fastened to the means of conveyance 5, over the entire length thereof at regular intervals apart, are holders (not shown) which can be shut off.

When it enters the preheating compartment 2, the means of conveyance 5 passes an infeed station 9, where products for sterilization can be placed in the passing holders.

On leaving the cooling compartment 4, the means of conveyance 5 passes a discharge station 10, where the products can be removed from the holders.

The speed of conveyance of the means of conveyance 5 depends on the number of holders, the weight of the holders and the products, and the heating and cooling capacity of the device. In a practical embodiment the number N of holders along the periphery of the means of conveyance 5 can amount to 4,000.

Since the drive of the means of conveyance 5 can be stopped due to various causes, there is a risk that the products of holders present in the sterilization compartment 3 will be over-sterilized. In order to monitor the over-sterilization of products and be able to detect and, if necessary, reject oversterilized products at the discharge station 10, the sterilization device according to the invention has monitoring means therefor. Fig.1 shows schematically monitoring means in the form of a detection device 11 which is connected to sensors 12, 13 which are disposed at randomly selected places along the means of conveyance 5 for detecting the passing of any holder or reference holder. An outlet of the detection device is connected to an alarm unit 14 which can work in concert with operating elements (not shown) of the discharge station 10.

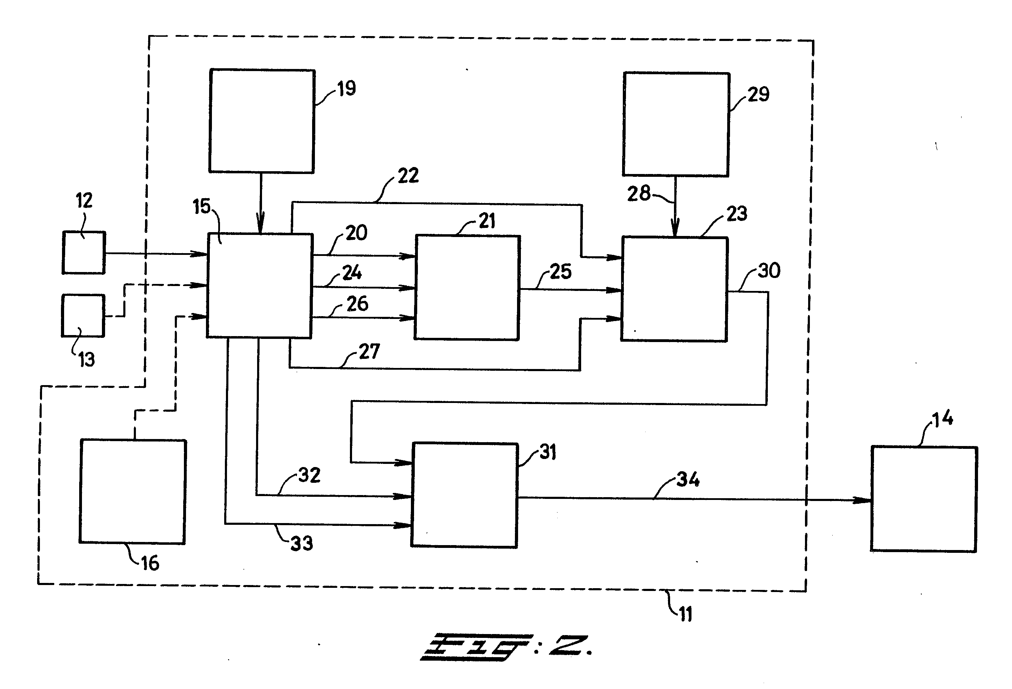

As shown in Fig. 2, the detection device 11 has a locating circuit 15, one input of which is connected to the sensor 12 for detecting the passing of all holders. Another input of the locating circuit 15 is connected to the sensor 13 for detecting the passing of a reference holder with serial number R, or another input of the locating circuit 15 is connected to a reference number setting circuit 16 for setting the serial number, e.g. R, of the holder passing the sensor 12 at the time of setting. By means of the sensor 12 and the sensor 13 or the setting circuit 15, the locating circuit 15 can determine the serial number of each holder passing the sensor 12. Since the total number N along the means of conveyance 5, the number N1 of holders between the sensor 12 and the inlet 17 of the sterilization compartment 3, and the number N2 of holders between the inlet 17 and the outlet 18 of the sterilization compartment 3 are known, the locating circuit 15 can determine by means of simple counting means, comprising a modulo-N-counter, the position of each holder within the sterilization room at any time.

Assuming that at the time of detection of the passing of a holder by the sensor 12 the locating circuit establishes the serial number I of said holder relative to a reference holder, the holder passing the inlet 17 of the sterilization compartment 3 at the time of detection has the serial number $J = I + N1$ (modulo N), and the holder passing the outlet 18 of the sterilization compartment 3 at that detection time has the serial number $K = I + N1 + N2$ (modulo N).

By means of a clock generator 19 connected to the locating circuit 15, the locating circuit 15 along a line 20 in response thereto delivers to a memory circuit 21 an infeed time signal for the holder J and delivers along a line 22 to a comparison circuit 23 a discharge time signal for the holder K. The locating circuit 15 delivers along a line 24 an address corresponsing to a serial number of a holder to the memory circuit 21 for storage therein of the infeed time signal for the holder J or for reading out thereof of an infeed time signal stored earlier for the holder K, this latter signal being delivered along a line 25 to the comparison circuit 23. Along lines 26, 27 control signals are delivered to the memory circuit 21 or to the reference circuit 23 on the detection time of a holder by sensor 12, said signals being for the recording or reading out of an infeed time signal or for the making of a comparison.

On receipt of a suitable control signal along the line 27, the comparison circuit 23 determines for the holder K a first difference between the infeed signal for the holder K received along the line 25 and recorded at an earlier time and the currently determined discharge signal for the holder K conveyed along the line 22. The comparison circuit 23 then determines a second difference between the first difference and a reference time signal received via a line 28 from a reference time circuit 29. If the second difference is greater than the reference time signal, the comparison circuit 23 delivers along a line 30 a message signal to another memory circuit 31 in which under the control of the locating circuit 15, by means of an address along the line 32 and a control signal along the line 33, it is stored as an exceeding value.

When the sensor 12 detects a holder the locating circuit 15 also determines the serial number M of the holder which is at the discharge station 10 at that time. An address signal corresponding to the serial number M is conveyed along the line 32 to the memory circuit 31 and when a suitable control signal is given along the line 33 the corresponding memory location of the memory circuit 31 is read. If the value of this memory location corresponds to a signal written therein earlier, the memory circuit 31 delivers along a line 34 a corresponding control signal to the alarm circuit 14 which in response thereto delivers an alarm signal and/or actuates operating elements of the discharge station 10.

At the time when the sensor 12 detects a holder the locating circuit 15 also preferably determines the serial number L of the holder which is a certain number (M-L) of holders before the discharge station 10. In the same way as for the holder with serial number M, the locating circuit 15 controls the memory circuit 31 in such a way that if a signal has been stored in the memory circuit 31 for the holder L, the alarm circuit 15 delivers an alarm signal for a short time.

It is pointed out that various modifications of the illustrated embodiment of the sterilization device according to the invention are possible within the scope of the invention.

The memory circuit 21 can be extended in such a way that both the infeed time signal and the discharge time signal are stored therein for each holder in the cooling compartment 4. The time at which the comparison circuit 23 calculates the comparison between the infeed time signal and the discharge time signal of each holder and compares with the reference time signal can then be shifted to a time at which the relevant holder is closer to or in the discharge station 10. In the latter case the memory circuit 31 can be omitted.

The memory circuits 21 and 31 can be shift registers with suitable branches for producing the recorded time signals and/or exceeding values for the holders with the serial numbers J, K, L and M.

Since the number of variables is, however, relatively small, it is preferable for the memories 21 and 31 to use a random access memory (RAM) having for each holder of the sterilization device at least one memory location for storage therein of the infeed time signal on passing of the inlet 17 of the second time difference signal or the exceeding signal on passing of the outlet 18. With the use of such a memory the detection circuit 11 can be formed by a microcomputer. The advantage of this is that summaries of the sterilization data of all holders can be displayed and recorded in a simple manner.

## Claims

1. Sterilization device comprising an endless means of conveyance to which a number of holders are fastened at regular intervals from each other, drive means for driving the means of conveyance, a number of treatment rooms which are connected in cascade, and are connected to each other by means of channels for allowing through the means of conveyance with the holders, said treatment rooms having at least a sterilization room, an infeed station for permitting placing of the products for sterilization in the holders from outside the treatment rooms, a discharge station for permitting removal of the products from the holders to outside the treatment rooms, and heating means which heat the sterilization room to a particular temperature, characterized by locating means which determine the position, relative to a fixed reference point, of each holder group of a number (N) of successive holder groups each having a certain number of successive holders and together comprising all holders, in which the locating means for each holder group deliver an infeed time signal which corresponds to the time at which the holder group goes into the sterilization room and for each holder group deliver a discharge signal which corresponds to the time at which the holder group leaves the sterilization room, memory means which record the infeed time signal for each holder group, reference time means which deliver a reference time signal, and comparison means which for each holder group between the sterilization room and the discharge station read the infeed time signal of the holder group out of the memory means and compare the difference between the infeed time signal and the discharge time signal of the holder group with the reference time signal, and on exceeding of the reference signal produce a corresponding message signal.

2. Sterilization device according to Claim 1, characterized in that the locating means have a sensor which is fixed along the means of conveyance and detects the passing of each holder group along the sensor and thereby establishes the serial number I of the holder group relative to a reference holder group with serial number R, while at the time of detection of a passage the number of holder groups between the sensor and an inlet for the means of conveyance of the sterilization room is N1 and the number of holder groups between the inlet of the sterilization room and an outlet for the means of conveyance from the sterilization room is N2, the locating means at each time of detection deliver a control signal to the memory means for recording of the infeed time signal of the holder group with serial number I + N1 (modulo N), and for reading out of the infeed time signal of the holder group with serial number I + N1 + N2 (modulo N), and the locating means deliver the control signal to the comparison means for determining the difference between the read-out infeed time signal and the discharge time signal.

3. Sterilization device according to Claim 2, characterized by switch means which are connected to the locating means and which on actuation deliver to the locating means a control signal for giving a particular serial number (I) to the holder group which is passing the sensor at that time.

4. Sterilization device according to Claim 1, characterized in that the locating means have a reference sensor which is fixed along the means of conveyance and detects the passing of the reference holder group with serial number R.

5. Sterilization device according to Claim 1, characterized in that the memory means for each holder group store the difference between the reference time signal and the difference between the infeed time signal and the discharge time signal.

6. Sterilization device according to Claim 1, characterized in that for each holder group the memory means store an exceeding value corresponding to the message signal.

7. Sterilization device according to Claim 1, characterized by recording means which display for each holder group information stored in the memory means after comparison with the reference time signal.

8. Sterilization device according to Claim 7, characterized in that the recording means determine a summary and display information stored in the memory means for holder groups for which the comparison with the reference time signal has taken place.

9. Sterilization device according to Claim 1, characterized by first alarm means which deliver a first alarm signal when a holder group with serial number M for which a message signal has been delivered reaches the discharge station.

10. Sterilization device according to Claim 1, characterized by second alarm means which for a certain time deliver a second alarm signal when a holder group with serial number L for which a message signal has been delivered is a certain number (M-L) of holder groups before the discharge station.

11. Sterilization device according to Claim 1, characterized in that each holder group has a single holder.

FIG:1.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | FR-A-2 240 151 (STORK AMSTERDAM) <br> * Page 7, line 1 - page 8, line 18; figures * | 1 | A 23 L 3/04 <br> B 65 B 55/12 |
| A | GB-A-2 057 850 (BARRY-WEHMILLER) <br> * Page 2, line 19 - page 3, line 53; figures * | 1 | |

TECHNICAL FIELDS
SEARCHED (Int. Cl.4)

A 23 L
B 65 B
A 61 L

The present search report has been drawn up for all claims

| Place of search | Date of completion of the search | Examiner |
|---|---|---|
| THE HAGUE | 10-08-1988 | JAGUSIAK A.H.G. |